# EUROPÄISCHE PATENTSCHRIFT

(11) **EP 2 113 451 B1**
(45) Veröffentlichungstag und Bekanntmachung des Hinweises auf die Patenterteilung: **08.01.2014**
(21) Anmeldenummer: 09002613.9
(22) Anmeldetag: 25.02.2009
(51) Int. Cl.: B62D 65/18, B65G 35/08

(54) **Vorrichtung und Verfahren zur Herstellung von Kraftfahrzeugen**
Method and device for producing motor vehicles
Procédé et dispositif destinés à la fabrication de véhicules automobiles

(30) Priorität: 30.04.2008 DE 102008022559
(43) Veröffentlichungstag der Anmeldung: 04.11.2009
(73) Patentinhaber: Dr. Ing. h.c. F. Porsche AG, 70435 Stuttgart (DE)
(72) Erfinder: Krüger, Detlef, 04229 Leipzig (DE); Birnstiel, Michael, 04277 Leipzig (DE); Treer, Walter, 70439 Stuttgart (DE); Maschmeier, Horst, 32289 Rödinghausen (DE)

(56) Entgegenhaltungen:
- GB-A- 2 232 944
- JP-A- 63 082 884
- JP-A- 2000 095 161

## Beschreibung

Die Erfindung betrifft eine Vorrichtung und ein Verfahren zur Herstellung von Kraftfahrzeugen in einer Fertigungslinie.

Aus dem Serienfahrzeugbau ist es bekannt, Fahrzeuge unterschiedlicher Modellreihen auf ein und der selben Fertigungslinie zu fertigen bzw. zusammenzuführen. Innerhalb der Fertigungslinie werden in der Regel unterschiedliche Fördermittel eingesetzt. So ist es üblich, Karossen auf Gestellen, Schubplatten oder Hängewagen zu transportieren. Die Auswahl des jeweiligen Fördermittels hängt von den Arbeiten ab, die an den einzelnen Arbeitsstationen jeweils an der Karosse vorgenommen werden sollen. So werden beispielsweise Hängewagen eingesetzt, wenn Arbeiten unter der Karosse durchgeführt werden, es werden Schubplatten eingesetzt, um beispielsweise Arbeiten im innenraum durchzuführen. Gestelle werden häufig eingesetzt, wenn Karossen von einer Arbeitsstation zu einer anderen Arbeitsstation längere Strecken überbrückt werden sollen.

Beim Fertigen von Fahrzeugen unterschiedlicher Modellreihen kann es vorkommen, dass sich diese in der Bodenstruktur und damit in den Aufnahmepunkten für die Fördermittel unterscheiden. Um die unterschiedlichen Aufnahmepunkte auszugleichen, werden Adapter zwischen der Karosse und dem Fördermittel angeordnet.

Die JP 2000095161 ebenfalls eine Fertigungslinie, innerhalb derer Karossen an einem Fördermittel gefördert werden, wobei das Fördermittel mit Domen in Öffnungen an der Unterseite der Karosserie eingreift.

Aus der gattungsgemäßen GB 2232944 ist eine Vorrichtung zum Transport von Fahrzeugkarossen in einer Fertigungsstraße bekannt, bei der an der Unterseite der Karosse jeweils ein Adapter rechts und links befestigt ist. Der Adapter weist unterschiedliche Eingriffsöffnungen auf, in die verschiedene Fördermittel eingreifen können.

Die Aufgabe der Erfindung besteht darin, eine Vorrichtung zur Herstellung von Kraftfahrzeugen in einer Fertigungslinie zu schaffen, mit der es möglich ist, dass die Adapter während nahezu des gesamten Fertigungsprozesses an der Karosse verbleiben können. Ferner ist ein Verfahren hierzu zu entwickeln.

Die Aufgabe wird erfindungsgemäß mit den Merkmalen des Patentanspruchs 1 gelöst.

Vorteilhafte Ausgestaltungen ergeben sich aus den Merkmalen der abhängigen Ansprüche.

Der Kern der Erfindung liegt darin, dass der verwendete Adapter auf seiner der Karosse zugewandten Seite für die spezifischen Aufnahmepunkte der Karosse ausgelegt ist und auf seiner dem Fördermittel zugewandten Seite Eingriffsöffnungen für das erste Fördermittel und Eingriffsöffnungen für das zweite Fördermittel aufweist. Das hat den Vorteil, dass beim Umsetzen von einem auf das andere Fördermittel kein Absetzen oder Umgreifen der Karosse notwendig ist. Zudem kann der Adapter während des ganzen Fertigungsprozesses an der Karosse verbleiben und muss nicht für jedes Fördermittel neu dazwischengeschaltet werden.

In einer bevorzugten Ausführungsform kann der Adapter zwei Adapterhälften aufweisen, die jeweils in teilweiser Überdeckung mit einem Schweller der Karosse angeordnet sind. Das hat den Vorteil, dass der Adapter platzsparend an der Karosse befestigt werden kann, so dass dieser die Karosse nicht aufbaut.

Für die Befestigung der Adapter können auf der der Karosse zugewandten Seite Dorne vorgesehen sein, die in Aufnahmepunkte der Karosse eingreifen. Hierbei ist form- und/oder kraftschlüssiges Eingreifen möglich.

Vorzugsweise können die Dorne in den Aufnahmepunkten der Karosse verriegelbar sein, um beispielsweise ein Verdrehen und Verschwenken von Hängewagen mit eingehängter Karosse zu ermöglichen. Das Verdrehen und Verschwenken ist deshalb notwendig, um Überkopf-Arbeiten zu vermeiden.

Besonders platzsparend wirkt sich aus, wenn sich die Eingriffsöffnungen für das erste Fördermittel in vertikaler Überdeckung mit den Dornenbefinden.

Indem der Abstand zwischen den Eingriffsöffnungen für das erste Fördermittel größer als der Abstand zwischen den Eingriffsöffnungen für das zweite Fördermittel ist, kann das erste Fördermittel außenseitig und das zweite Fördermittel innenseitig an dem Adapter angreifen. Das hat den Vorteil, dass die beiden Fördermittel in ihren Bewegungen nicht miteinander kollidieren.

Für das Umsetzen der Karosse von dem ersten Fördermittel auf das zweite Fördermittel gelangen dessen Zapfen durch einen vertikalen Hub in Eingriff mit den korrespondierenden Eingriffsöffnungen des Adapters gelangt. Selbstverständlich gilt dies auch für ein Umsetzen in umgekehrter Richtung.

Nach dem Eingreifen der Zapfen des zweiten Fördermittels in die korrespondierenden Eingriffsöffnungen des Adapters kann ein vertikaler Hub erfolgen, bis die Zapfen des ersten Fördermittels aus Eingriff mit den korrespondierenden Eingriffsöffnungen des Adapters kommen. Damit ist die Übergabe abgeschlossen und das erste leergeräumte Fördermittel kann an anderer Stelle eine Karosse wieder übernehmen.

Das erfindungsgemäße Verfahren zur Herstellung von Kraftfahrzeugen in einer Fertigungslinie besteht darin, dass innerhalb der Fertigungslinie Karossen von einem ersten Fördermittel auf ein zweites Fördermittel übergeben werden, wobei zwischen dem Fördermittel und der Karosse ein Adapter angeordnet wird, in dessen Eingriffsöffnungen Zapfen des ersten Fördermittels eingreifen und nach Übergabe an das zweite Fördermittel in dessen Eingriffsöffnungen Zapfen des zweiten Fördermittels eingreifen.

Weitere vorteilhafte Ausgestaltungen der Erfindung werden im folgenden anhand der Zeichnung näher erläutert. Dabei zeigen:
- Figur 1: einen schematischen Ablauf einer Fertigungslinie,
- Figur 2: eine räumliche Anordnung der Fertigungslinie,
- Figur 3: ein Entkopplungsmodul der Fertigungslinie,
- Figur 4: eine Vorlaufstrecke der Fertigungslinie,
- Figur 5: Umsetzen eines Adapters von einem Hängewagen einer Elektrohängebahn auf eine Schubplatte in einer ersten Position,
- Figur 6: Umsetzen des Adapters vom Hängewagen auf die Schubplatte gemäß Figur 1 in einer zweiten Position,
- Figur 7: Umsetzen des Adapters vom Hängewagen auf die Schubplatte gemäß Figur 1 in einer dritten Position,
- Figur 8: Umsetzen des Adapters vom Hängewagen auf die Schubplatte gemäß Figur 1 in einer vierten Position,
- Figur 9: Umsetzen des Adapters vom Hängewagen auf die Schubplatte gemäß Figur 1 in einer fünften Position,

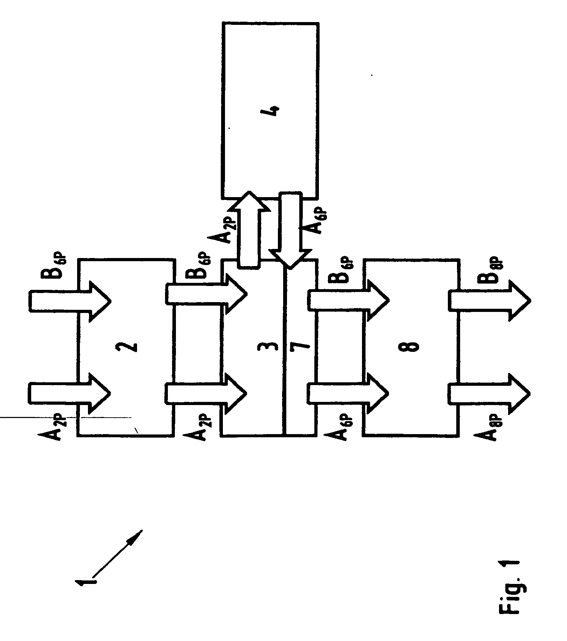

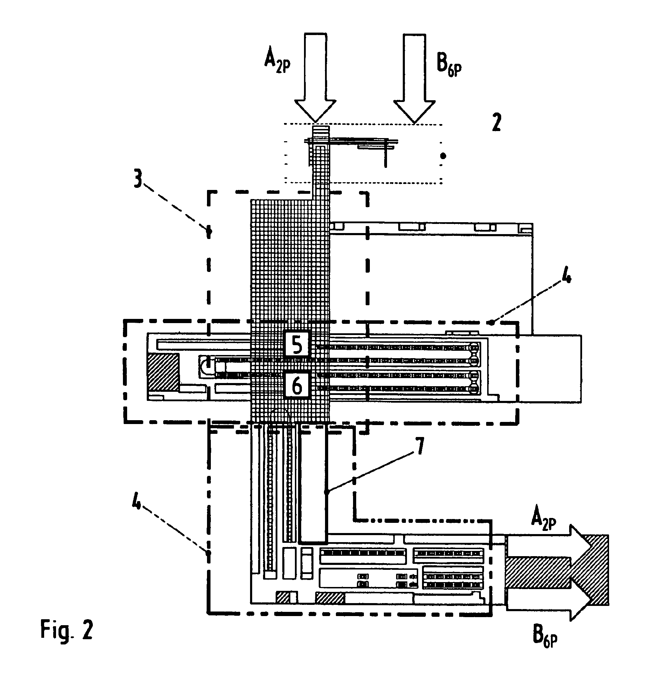

Figur 1 zeigt einen schematischen Ablauf einer Fertigungslinie 1 zur Fertigung von Personenwagen A und B auf ein und derselben Fertigungslinie. Die Bezugszeichen A und B stellen dabei Personenwagen zweier unterschiedlicher Modellreihen dar. Aus Figur 2 geht eine denkbare räumliche Anordnung der Fertigungslinie 1 hervor.

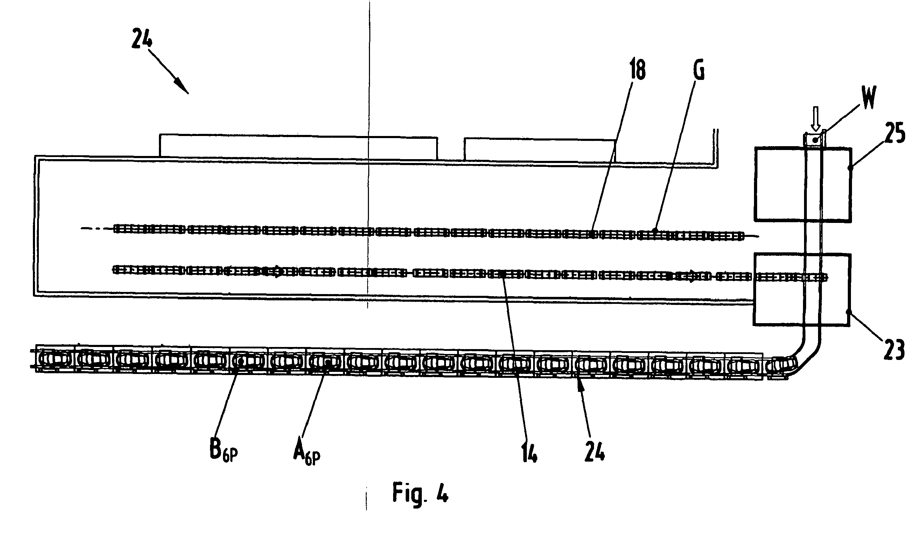

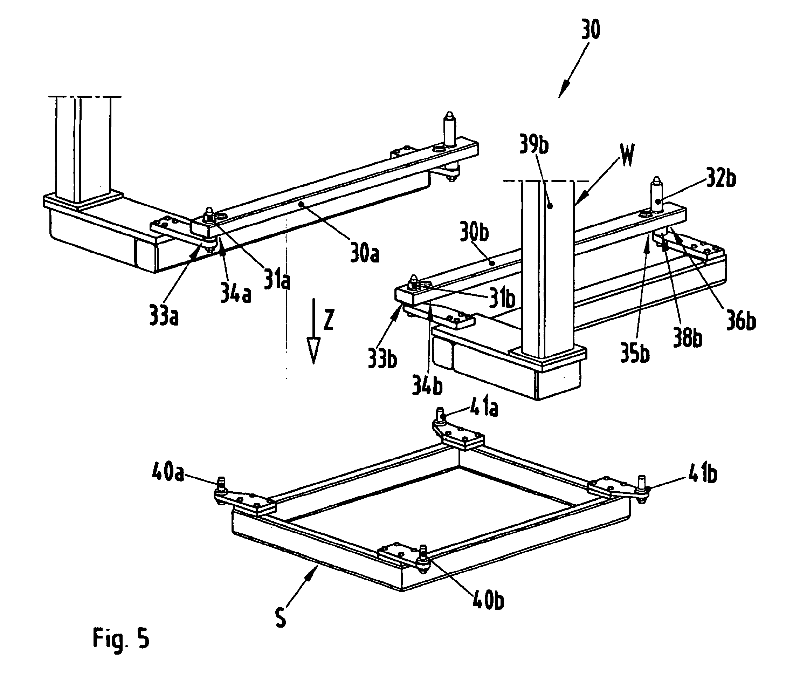

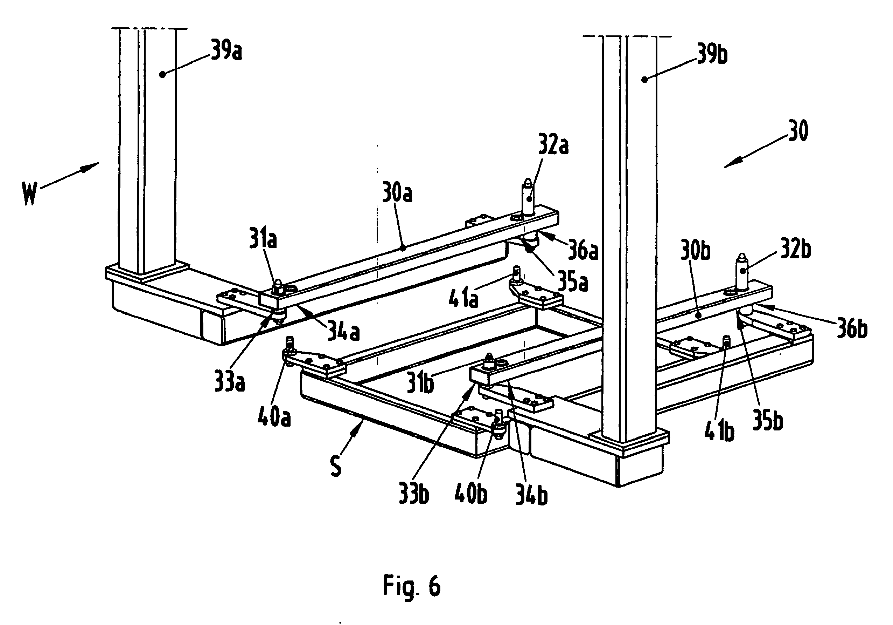

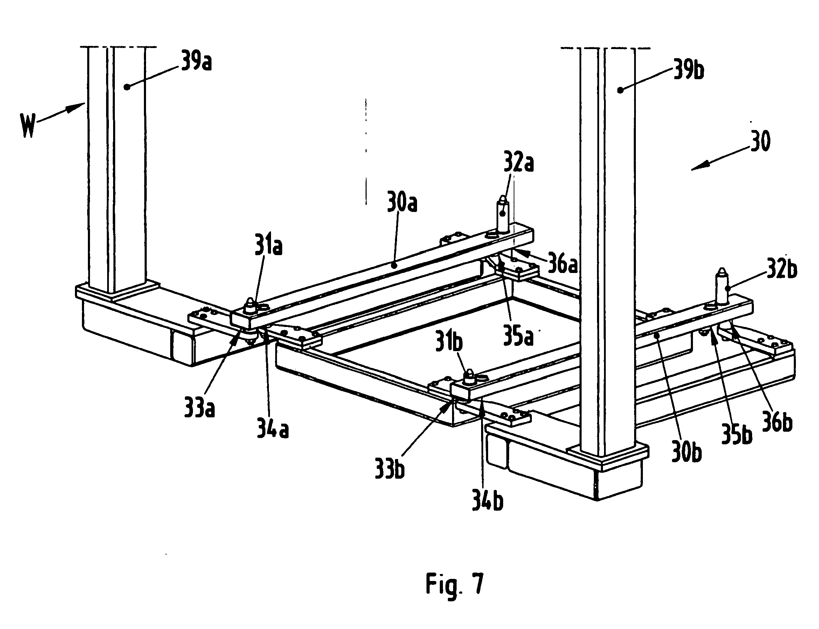

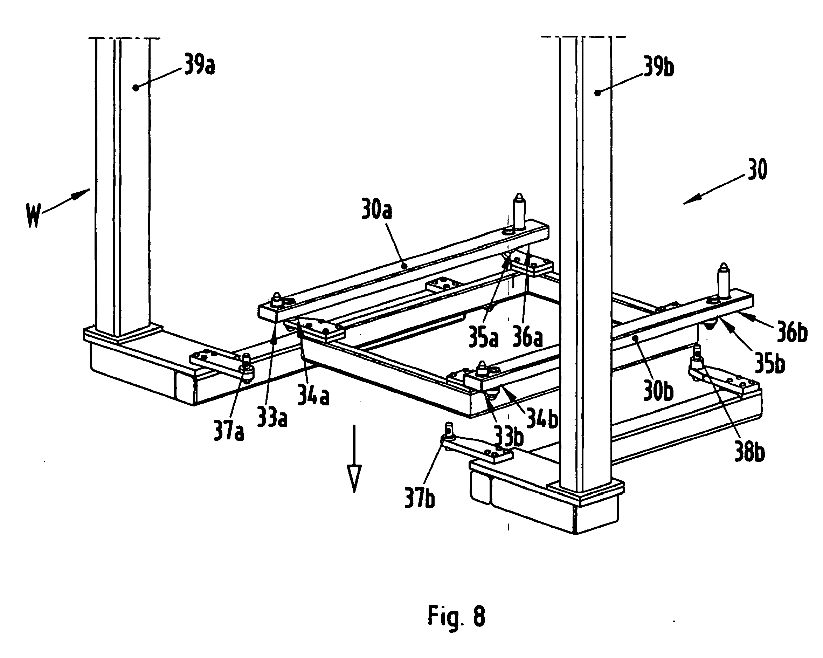

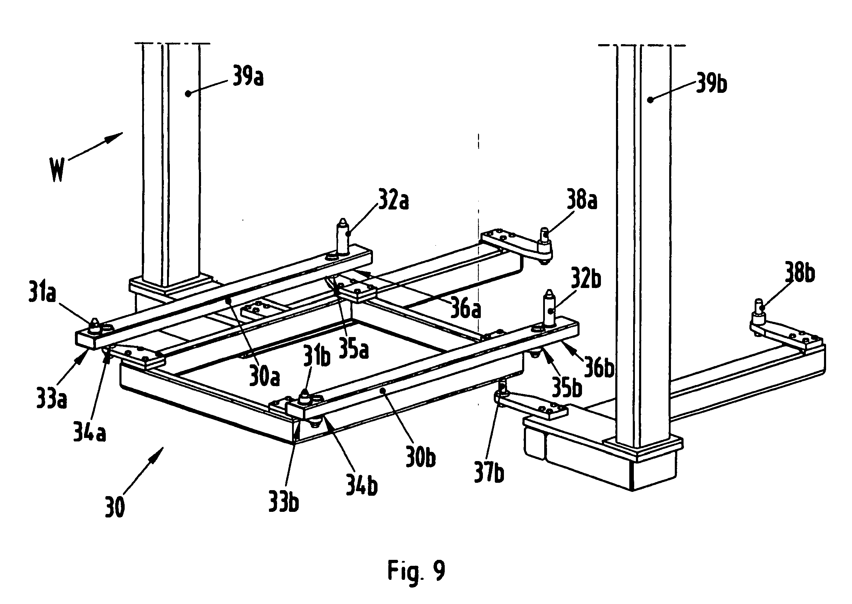

Die Fertigung ist dadurch gekennzeichnet, dass die Personenwagen bis zu einem definierten Bauzustand an einem räumlich entfernten Produktionsstandort vorgefertigt und per Transportmittel, vorzugsweise per Bahn, in einer geplanten Transportreihenfolge an einer Entladestation 2 der Fertigungslinie 1 angeliefert werden. Dabei ist es vorgesehen, dass die Personenwagen A in einem sogenannten Bauzustand 2P, also als lackierte Karosse A_{2P}, von einem ersten Produktionsstandort und die Personenwagen B in einem sogenannten Bauzustand 6P, also als Karosse mit Innenausstattung B_{6P}, von einem zweiten Produktionsstandort angeliefert werden. Die Entladestation 2 entlädt abwechselnd die Transportmittel, die entweder mit Karossen A_{2P} oder mit Karossen B_{6P} beladen sind, und setzt jede Karosse A_{2P} bzw. B_{6P} auf ein eigenes Gestell, einen sogenannten Skid. Dabei ist vorgesehen, dass jede Karosse A_{2P} und B_{6P} über einen Adapter auf dem Gestell G befestigt. Auf den Adapter wird in den Figuren 1 bis 4 nicht näher eingegangen. Dessen Aufbau und Funktionsweise wird anhand der Figuren 5 bis 9 erläutert.

Nach der Entladestation 2 wird jedes Gestell mit dem Adapter und einer Karosse A_{2P} bzw. B_{6P} über einen Vertikalförderer auf einer entsprechenden Fördertechnik in ein Entkopplungsmodul 3 transportiert.

Im Entkopplungsmodul 3 werden die Karossen A_{2P} in eine Montagelinie 4 eingespeist, die im wesentlichen quer zum Entkopplungsmodul 3 und in einer anderen Ebene angeordnet ist. In der Montagelinie 4 werden in der die Karossen A_{2P} auf die Baustufe 6P gebracht. Für die Arbeiten innerhalb der Montagelinie 4 ist es notwendig, dass die Karossen A wahlweise auf Schubplatten und Elektrohängebahnen transportiert werden. Daher werden die Karossen A_{2P} zusammen mit ihrem jeweiligen Adapter bei Übergabe an die Montagelinie 4 von ihrem Gestell auf eine Schubplatte umgesetzt und mit einem ersten Vertikalförderer 5 in die andere Ebene abgesenkt. Bei Übergabe der vervollständigten Karossen A_{6P} aus der Montagelinie 4 zurück in das Entkopplungsmodul 3 werden diese zusammen mit ihrem Adapter von ihrer Schubplatte auf ein leeres Gestell umgesetzt und über einen zweiten Vertikalförderer 6 in die Ebene des Entkopplungsmoduls 3 angehoben, so dass Karossen A_{6P} die Montagelinie 4 in Richtung Entkopplungsmodul 3 verlassen.

Von dem Entkopplungsmodul 3 werden die Karossen A_{6P} und B_{6P} sequenziert, d.h. in einer geplanten Ausbringungsreihenfolge in eine Vorlaufstrecke 7 übergeben. Hier findet die Übergabe der auf dem Gestell abgestellten Karossen A_{6P} und B_{6P} wiederum zusammen mit dem Adapter auf die in der Endmontage 8 genutzten Elektrohängebahnen statt.

In der Endmontage 8 werden die Karossen A_{6P} und B_{6P} in ihre Baustufe 8P gebracht und verlassen als Karossen A_{8P} und B_{8P} die Fertigungslinie 1, wobei hierfür die Adapter von dem jeweiligen Personenwagen A bzw. B entfernt sein müssen.

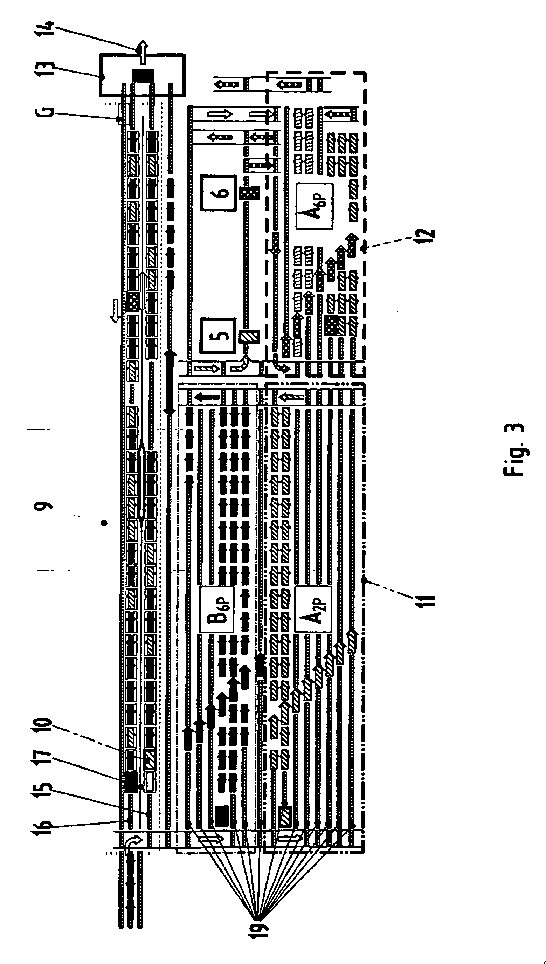

Aus Figur 3 geht das Entkopplungsmodul 3 hervor. Die Karossen A_{2P} sind dabei schräg schraffiert, die Karossen A_{6P} grau hinterlegt und die Karossen B_{6P} schwarz ausgefüllt dargestellt. Das Enkopplungsmodul 3 umfasst einen wahlfreien Speicher 9, der geeignet ist, Gestelle mit Karossen jeglicher Art (A_{2P}, A_{6P}, B_{6P}) aufzunehmen. Ferner ist ein Gassenspeicher 10 für Karossen B_{6P}, ein Gassenspeicher 11 für Karossen A_{2P} und ein Gassenspeicher 12 für Karossen A_{6P} vorgesehen. Die mit Bezugsziffer 13 bezeichnete Station dient zur Sequenzierung und zur Übergabe der Karossen A_{6P} und B_{6P} in die Vorlaufstrecke 7. D. h., hier werden die Karossen A_{6P} und B_{6P} in der Reihenfolge auf eine Förderstrecke 14 eingemischt, in der sie in der Endmontage 8 gefertigt werden sollen.

In dem wahlfreien Speicher 9 können die auf ihren Gestellen G gelagerten Karossen von jeder beliebigen Position auf zwei außenseitigen Schienen 15 und 16 auf eine mittlere Schiene 17 übersetzt und auf dieser hin- und her bewegt werden. So können die Gestelle G mit den Karossen beispielsweise direkt zur Sequenzierstation 13 oder zum Vertikalförderer 5 gefördert werden. D.h., auf jede der Karossen im wahlfreien Speicher 9 kann nach Bedarf zugegriffen werden, damit diese an eine beliebige Stelle in den Prozess eingeschleust wird.

Parallel hinter den Schienen 15, 16 und 17 des wahlfreien Speichers 9 verläuft eine Förderstrecke 18 zum Transport von mit Adaptern bestückten Gestellen G zurück zur Entladestation 2, wo sie jeweils erneut mit einer neu angekommenen Karosse bestückt werden können.

Der Gassenspeicher 10 ist mit sechs Speichergassen 19 versehen, in denen Karossen B_{6P} hintereinander in der Reihenfolge gelagert sind, in der sie planmäßig in die Endmontage 8 eingeschleust werden sollen. Der Gassenspeicher 11 nimmt die Karossen A_{2P} auf insgesamt neun Speichergassen 19 in der Reihenfolge auf, in der diese in die Montagelinie 4 eingeschleust werden sollen. Die Reihenfolge der Karossen A_{6P} in den acht Speichergassen 19 des Gassenspeichers 12 richtet sich wiederum nach der Reihenfolge mit der die Karossen in der Endmontage 8 mit den Karossen B_{6P} eingemischt werden sollen. Die in die Speichergassen 19 eingezeichneten Pfeile zeigen die vorgesehene Förderrichtung an.

Die Gassenspeicher 10, 11, 12, der wahlfreie Speicher 9 sowie die Sequenzierstation 13 sind durch quer verlaufende Förderstrecken 20 untereinander verbunden. Die in die Förderstrecken 20 eingezeichneten Pfeile zeigen die zulässige Transportrichtung.

Hinter der äußersten Speichergasse 18 des Gassenspeichers 10 ist eine Bypassförderstrecke 21 vorgesehen, auf der Karossen B_{6P} direkt von der Entladestation 2 in der gelieferten Reihenfolge zur Sequenzierstation 13 gefördert werden können.

Zwischen dem Gassenspeicher 12 und dem wahlfreien Speicher 9 sind die beiden Vertikalförderer 5 und 6 angeordnet, mit denen die Karossen A_{2P} vom Gassenspeicher 11 in die Montagelinie 4 ein- und von der Montagelinie 4 in den Gassenspeicher 12 als zugefertigte Karossen A_{6P} wieder ausgeschleust werden. Aus dem Gassenspeicher 12 gelangen die Karossen A_{6P} gemäß den eingezeichneten Pfeilen zur Sequenzierstation 13.

Mit dem dargestellten Entkopplungsmodul 3 lässt sich an der Sequenzierstation 13 aus den ankommenden Umfängen genau die Reihenfolge zusammenstellen, die bei der gemischten Fertigung der Karossen A_{6P} und B_{6P} in der Endmontage 8 benötigt wird.

Das Entkopplungsmodul 3 ist über die Sequenzierstation 13 mit der Vorlaufstrecke 7 verbunden. Die in der geplanten Ausbringungsreihenfolge auf einer an die Förderstrecke 14 anschließende Förderstrecke 22 geförderten Karossen A_{6P} und B_{6P} werden an einer Übergabestation 23 von ihrem jeweiligen Gestell G zusammen mit ihrem Adapter an einen Hängewagen W einer Elektrohängebahn 24 übergeben.

Unmittelbar neben der Übergabestation 23 ist eine Rückführstation 25 angeordnet. Von der Übergabestation 23 wird das gerade freigewordene Gestell G an die Rückführstation 25 übergeben. Dort wird von einem in der Endmontage 8 leergeräumten Hängewagen W, der nunmehr nur noch den Adapter des inzwischen auf seine in der Endmontage 8 eingebauten Räder gestellten Fahrzeugs trägt, der Adapter automatisch auf das freigewordene Gestell G übergeben. Dieses fährt dann zusammen mit dem darauf abgelegten Adapter auf der Förderstrecke 18 bis zur Entladestation 2 zurück. Die neu ankommenden Karossen A_{2P} bzw. B_{6P} werden in der Entladestation 2 unter Zwischenschaltung des Adapters auf die Gestelle G abgestellt.

Die Karossen A bzw. B werden also während des gesamten Fertigungsprozesses zusammen mit dem Adapter innerhalb der Fertigungslinie 1 transportiert, gefördert und übergeben bis das Fahrzeug von dem Hängewagen W auf seine Räder abgestellt wird. Hier verbleibt der Adapter solange am Hängewagen W bis dieser zur Rückführstation 25 gelangt. Durch das Übergeben des Adapters auf das soeben freigewordene Gestell G ist der Hängewagen W frei, eine Karosse A_{6P} oder B_{6P} mit dem jeweiligen Adapter zu übernehmen.

Der Aufbau und die Funktionsweise des Adapters wird im folgenden anhand der Figuren 5 bis 9 näher erläutert.

Da sich die Personenwagen A und B in ihrer Bodenanlage unterscheiden können, was sich insbesondere für die Position der Aufnahmepunkte auswirken kann, ist ein Adapter 30 vorgesehen, der über den gesamten Fertigungsprozess bis zu dem Punkt an den Karossen A bzw. B verbleibt, bis diese auf ihre Räder gestellt werden.

Der Adapter 30 umfasst zwei spiegelsymmetrisch zueinander ausgerichteten Adapterhälften 30a und 30b. Diese weisen an ihrer Oberseite jeweils zwei Dorne 31a und 32a bzw. 31b und 32b auf. Die Position der Dorne 31a, 31b und 32a, 32b richtet sich nach den Aufnahmepunkten an der Bodenanlage des Personenwagens A. Es kann vorgesehen sein, dass die Dorne 31a, 31b und 32a, 32b exzentrisch ausgebildet sind, wobei durch Verdrehen der Dorne 31 und 32 um ihre Längsachse eine Verriegelung an den Aufnahmepunkten erfolgt. Dieses Verdrehen kann automatisch erfolgen. Der Vorteil dieser Verriegelung liegt darin, dass die Karosse A in einem Hängewagen W zusätzlich um die Fahrzeuglängsachse verdreht werden kann, ohne dass ein Herausfallen möglich ist.

An seiner Unterseite ist jede Adapterhälfte 30a, 30b vorne mit jeweils zwei Eingriffsöffnungen 33a, 33b und 34a, 34b sowie hinten mit jeweils zwei Eingriffsöffnungen 35a, 35b und 36a, 36b versehen. Die Position dieser Eingriffsöffnungen richtet sich nach den eingreifenden Zapfen der jeweiligen Fördertechnik.

In dem dargestellten Ausführungsbeispiel sind die Eingriffsöffnungen 33a, 33b, 36a sowie 36b entsprechend der Zapfen 37a, 37b, 38a und 38b eines Hängewagens W, von dem lediglich die beiden Greifarme 39a und 39b dargestellt sind, der nicht näher dargestellten Elektrohängebahn angeordnet.

Die Eingriffsöffnungen 34a, 34b, 35a sowie 35b sind entsprechend der Zapfen 40a, 40b, 41a und 41b einer Schubplatte S an der Unterseite der Adapterhälften 30a und 30b positioniert.

Die Adapter für die Karossen B sind in dem beschriebenen Ausführungsbeispiel identisch mit den Adaptern 30 für die Karossen A, da die Aufnahmepunkte an den Karossen A und B identisch sind. Es ist jedoch auch denkbar, dass sich die Aufnahmepunkte der Karossen A von denen der Karosse B unterscheiden. In diesem Fall unterscheiden sich die Adapterhälften 30a und 30b lediglich dadurch, dass die Dorne für die Aufnahmepunkte entsprechend der Bodenanlage positioniert sind. Die Eingriffsöffnungen 33, 34, 35 und 36 für die Fördertechnik bleiben an der gleichen Position, so dass die Zapfen der Fördertechnik unabhängig von der jeweils aufgenommenen Karosse immer an der gleichen Position sind. Das hat den Vorteil, dass Karossen unterschiedlicher Modellreihen, d.h. mit unterschiedlichen Aufnahmepunkten an der Bodenanlage auf einer gemeinsamen Fertigungslinie 1 transportiert werden können. Außerdem kann durch die beiden vorderen Eingriffsöffnungen 33 und 34 sowie die beiden hinteren Eingriffsöffnungen 35 und 36 die Karosse von einer auf die andere Fördertechnik übergeben werden, ohne dass aufwendige Umsetzprozesse oder Umgreifprozeduren durchgeführt werden müssen.

Das vorteilhafte Umsetzen durch den Adapter 30 lässt sich am Beispiel eines Umsetzprozesses von einem Hängewagen einer Elektrohängebahn auf eine Schubplatte wie folgt zusammenfassen:

Der Hängewagen W wird in Pfeilrichtung Z auf die Schubplatte S abgesenkt und zwar so, dass sich die Zapfen 40a, 40b, 41a, 41b in Überdeckung mit den Eingriffsöffnungen 34a, 34b, 35a, 35b befindet. Sobald sich die Zapfen 40a, 40b, 41a, 41b in Eingriff mit den Eingriffsöffnungen 34a, 34b, 35a, 35b befinden, wird der Hängewagen noch soweit abgesenkt, dass sich die Zapfen 37a, 37b, 38a, 38b nicht mehr im Eingriff mit ihren korrespondierenden Eingriffsöffnungen 33a, 33b, 36a, 36b befinden. Die Schubplatte S kann mit dem aufgenommenen Adapter 30 respektive der nicht dargestellten Karosse A nunmehr gemäß Pfeilrichtung X nach vorne aus dem von den Greifarmen 39a, 39b aufgespannten Bereich weg bewegt werden.

Alternativ zu dem beschriebenen Umsetzen kann anstelle eines Absenkens des Hängewagens W die Schubplatte S entgegen Pfeilrichtung Z angehoben und der Hängewagen W in oder entgegen Pfeilrichtung X weg bewegt werden.

Ferner ist es nach dem gleichen Prinzip möglich, den Adapter 30 respektive die Karosse von der Schubplatte S auf einen Hängewagen W oder von dem Gestell G auf eine Schubplatte S und umgekehrt zu übergeben. Da der Adapter 30 immer vier freie Eingriffsöffnungen aufweist, auch wenn er von einer ersten Fördertechnik gehalten ist, kann die Karosse stets an eine zweite Fördertechnik übergeben werden, ohne dass die Karosse umgesetzt werden muss.

## Patentansprüche

1. Vorrichtung zur Herstellung von Kraftfahrzeugen in einer Fertigungslinie, innerhalb derer Karossen (A2P, A6P, B6P) von einem ersten Fördermittel, insbesondere von einem Hängewagen (W), einer Schubplatte (S) oder einem Gestell (G), auf ein zweites Fördermittel, insbesondere von einem Hängewagen (W), einer Schubplatte (S) oder einem Gestell (G), übergeben werden, wobei zwischen dem Fördermittel und der Karosse (A2P, A6P, B6P) ein Adapter (30) angeordnet ist, der Eingriffsöffnungen (33a, 33b, 36a, 36b) für das erste Fördermittel und Eingriffsöffnungen (34a, 34b, 35a, 35b) für das zweite Fördermittel aufweist, wobei der Adapter (30) Dorne (31a, 31b, 32a, 32b) aufweist, die in Aufnahmepunkte der Karosse (A2P, A6P, B6P) eingreifen, **dadurch gekennzeichnet, dass** sich die Eingriffsöffnungen (33a, 33b, 36a, 36b) für das erste Fördermittel, insbesondere für den Hängewagen (W), in vertikaler Überdeckung mit den Dornen (31a, 31b, 32a, 32b) befinden.

2. Vorrichtung nach Anspruch 1,
**dadurch gekennzeichnet,**
**dass** der Adapter (30) zwei Adapterhälften (30a, 30b) aufweist, die jeweils in teilweiser Überdeckung mit einem Schweller der Karosse (A2P, A6P, B6P) angeordnet sind.

3. Vorrichtung nach Anspruch 1 oder 2,
**dadurch gekennzeichnet,**
**dass** die Dornen (31a, 31b, 32a, 32b) in den Aufnahmepunkten der Karosse (A2P, A6P, B6P) verriegelbar sind.

4. Vorrichtung nach einem oder mehreren der vorgenannten Ansprüche,
**dadurch gekennzeichnet,**
**dass** der Abstand zwischen den Eingriffsöffnungen (33a, 33b, 36a, 36b) für das erste Fördermittel, insbesondere für den Hängewagen (W), größer als der Abstand zwischen den Eingriffsöffnungen (34a, 34b, 35a, 35b) für das zweite Fördermittel, insbesondere für die Schubplatte (S) ist.

5. Vorrichtung nach einem oder mehreren der vorgenannten Ansprüche,
**dadurch gekennzeichnet,**
**dass** für das Umsetzen der Karosse (A2P, A6P, B6P) von dem ersten Fördermittel auf das zweite Fördermittel, dessen Zapfen (40a, 40b, 41a, 41b) durch einen vertikalen Hub in Eingriff mit den korrespondierenden Eingriffsöffnungen (34a, 34b, 35a, 35b) des Adapters (30) gelangt.

6. Vorrichtung nach Anspruch 5,
**dadurch gekennzeichnet,**
**dass** nach dem Eingreifen der Zapfen (40a, 40b, 41a, 41b) des zweiten Fördermittels in die korrespondierenden Eingriffsöffnungen (34a, 34b, 35a, 35b) des Adapters (30) ein vertikaler Hub erfolgt, bis die Zapfen (37a, 37b, 38a, 38b) des ersten Fördermittels aus Eingriff mit den korrespondierenden Eingriffsöffnungen (33a, 33b, 36a, 36b) des Adapters (30) kommen.

## Claims

1. Device for producing motor vehicles on a production line, within which vehicle bodies (A_{2P}, A_{6P}, B_{6P}) are transferred from a first conveying means, in particular from a suspended carriage (W), a skillet (S) or a frame (G), to a second conveying means, in particular a suspended carriage (W), a skillet (S) or a frame (G), wherein an adapter (30) which has engagement openings (33a, 33b, 36a, 36b) for the first conveying means and engagement openings (34a, 34b, 35a, 35b) for the second conveying means is arranged between the conveying means and the vehicle body (A_{2P}, A_{6P}, B_{6P}), wherein the adapter (30) has prongs (31a, 31b, 32a, 32b) which engage in mounting points of the vehicle body (A_{2P}, A_{6P}, B_{6P}), **characterized in that** the engagement openings (33a, 33b, 36a, 36b) for the first conveying means, in particular for the suspended carriage (W), overlap vertically with the prongs (31a, 31b, 32a, 32b).

2. Device according to Claim 1, **characterized in that** the adapter (30) has two adapter halves (30a, 30b) which each partially overlap with a sill of the vehicle body (A_{2P}, A_{6P}, B_{6P}).

3. Device according to Claim 1 or 2, **characterized in that** the prongs (31a, 31b, 32a, 32b) are lockable in the mounting points of the vehicle body (A_{2P}, A_{6P}, B_{6P}).

4. Device according to one or more of the preceding claims, **characterized in that** the distance between the engagement openings (33a, 33b, 36a, 36b) for the first conveying means, in particular for the suspended carriage (W), is greater than the distance between the engagement openings (34a, 34b, 35a, 35b) for the second conveying means, in particular for the skillet (S).

5. Device according to one or more of the preceding claims, **characterized in that**, for the transfer of the vehicle body (A_{2P}, A_{6P}, B_{6P}) from the first conveying means to the second conveying means, the pins (40a, 40b, 41a, 41b) of said second conveying means enter into engagement with the corresponding engagement openings (34a, 34b, 35a, 35b) of the adapter (30) by means of a vertical lift.

6. Device according to Claim 5, **characterized in that**, after the pins (40a, 40b, 41a, 41b) of the second conveying means engage in the corresponding engagement openings (34a, 34b, 35a, 35b) of the adapter (30), a vertical lift takes place until the pins (37a, 37b, 38a, 38b) of the first conveying means are disengaged from the corresponding engagement openings (33a, 33b, 36a, 36b) of the adapter (30).

## Revendications

1. Dispositif de fabrication de véhicules automobiles dans une chaîne de fabrication, à l'intérieur de laquelle des caisses (A_{2P}, A_{6P}, B_{6P}) sont transférées depuis un premier moyen de transport, en particulier depuis un chariot suspendu (W), une plaque de poussée (S) ou un bâti (G), sur un deuxième moyen de transport, en particulier un chariot suspendu (W), une plaque de poussée (S) ou un bâti (G), un adaptateur (30) étant disposé entre le moyen de transport et la caisse (A_{2P}, A_{6P}, B_{6P}), lequel adaptateur présente des ouvertures d'engagement (33a, 33b, 36a, 36b) pour le premier moyen de transport et des ouvertures d'engagement (34a, 34b, 35a, 35b) pour le deuxième moyen de transport, l'adaptateur (30) présentant des mandrins (31a, 31b, 32a, 32b) qui viennent en prise dans des points de réception de la caisse (A_{2P}, A_{6P}, B_{6P}), **caractérisé en ce que** les ouvertures d'engagement (33a, 33b, 36a, 36b) pour le premier moyen de transport, en particulier pour le chariot suspendu (W), se trouvent en position de recouvrement vertical avec les mandrins (31a, 31b, 32a, 32b).

2. Dispositif selon la revendication 1,
**caractérisé en ce que**
l'adaptateur (30) présente deux moitiés d'adaptateur (30a, 30b) qui sont chacune disposées en position de recouvrement partiel avec un bas de marche de la caisse (A_{2P}, A_{6P}, B_{6P}).

3. Dispositif selon la revendication 1 ou 2,
**caractérisé en ce que**
les mandrins (31a, 31b, 32a, 32b) peuvent être verrouillés dans les points de réception de la caisse (A_{2P}, A_{6P}, B_{6P}).

4. Dispositif selon l'une quelconque ou plusieurs des revendications précédentes,
**caractérisé en ce que**
la distance entre les ouvertures d'engagement (33a, 33b, 36a, 36b) pour le premier moyen de transport, en particulier pour le chariot suspendu (W), est supérieure à la distance entre les ouvertures d'engagement (34a, 34b, 35a, 35b) pour le deuxième moyen de transport, en particulier pour la plaque de poussée (S).

5. Dispositif selon l'une quelconque ou plusieurs des revendications précédentes,
**caractérisé en ce que**
pour le transfert de la caisse (A_{2P}, A_{6P}, B_{6P}) du premier moyen de transport au deuxième moyen de transport, son tourillon (40a, 40b, 41a, 41b) parvient, par une course verticale, en prise avec les ouvertures d'engagement correspondantes (34a, 34b, 35a, 35b) de l'adaptateur (30).

6. Dispositif selon la revendication 5,
**caractérisé en ce que**
après l'engagement des tourillons (40a, 40b, 41a, 41b) du deuxième moyen de transport dans les ouvertures d'engagement correspondantes (34a, 34b, 35a, 35b) de l'adaptateur (30), il se produit une course verticale, jusqu'à ce que les tourillons (37a, 37b, 38a, 38b) du premier moyen de transport parviennent hors d'engagement avec les ouvertures d'engagement correspondantes (33a, 33b, 36a, 36b) de l'adaptateur (30).
